# EUROPÄISCHE PATENTSCHRIFT

(11) **EP 2 130 710 B1**
(45) Veröffentlichungstag und Bekanntmachung des Hinweises auf die Patenterteilung: **04.10.2017**
(21) Anmeldenummer: 09159985.2
(22) Anmeldetag: 12.05.2009
(51) Int. Cl.: B60K 23/08, F16H 3/56

(54) **Antriebsstrang für ein Allradfahrzeug und Verfahren zum Ansteuern desselben**
Drive shaft for an all-terrain vehicle and method for controlling same
Chaîne de transmission pour un véhicule à traction intégrale et procédé destiné à sa commande

(30) Priorität: 05.06.2008 DE 102008027672
(43) Veröffentlichungstag der Anmeldung: 09.12.2009
(73) Patentinhaber: Getrag Driveline Systems GmbH, 50735 Köln (DE)
(72) Erfinder: Nett, Hans-Peter, 53518 Adenau (DE); Oberhausen, Bernd, 50678 Köln (DE); Höck, Michael, 53819 Neunkirchen-Seelscheid (DE); Haupt, Jan, 51469 Bergisch Gladbach (DE)
(74) Vertreter: Witte, Weller & Partner Patentanwälte mbB

(56) Entgegenhaltungen:
- WO-A1-03/022615
- WO-A1-2006/029684
- WO-A1-2006/100585
- WO-A1-2008/120097
- WO-A2-2005/080117
- GB-A- 2 230 498
- US-A1- 2004 106 487
- US-B1- 6 309 322

## Beschreibung

Die vorliegende Erfindung betrifft einen Antriebsstrang für ein Allradfahrzeug, das eine erste angetriebene Achse und eine zweite angetriebene Achse aufweist, mit einer Antriebseinheit, die mit einem Stufengetriebe verbunden ist, das eine Mehrzahl von Gangstufen zum Einrichten unterschiedlicher Übersetzungsverhältnisse aufweist, wobei eine Getriebeausgangswelle des Stufengetriebes mit der ersten angetriebenen Achse verbunden ist, wobei die Antriebseinheit ferner mit einer Zuschaltanordnung verbunden ist, deren Ausgangsglied mit der zweiten angetriebenen Achse verbunden ist, so dass Antriebsleistung über das Stufengetriebe der ersten Achse permanent zuführbar ist und Antriebsleistung über die Zuschaltanordnung der zweiten Achse nach Bedarf zuführbar ist.

Ferner betrifft die vorliegende Erfindung ein Verfahren zum Ansteuern eines Antriebsstranges, der eine Antriebseinheit aufweist, die zum einen über ein Getriebe mit einer ersten Achse und zum anderen über eine Zuschaltanordnung mit einer zweiten Achse verbunden ist.

In den letzten Jahren ist das Interesse an allradgetriebenen Kraftfahrzeugen gestiegen. Dabei wird der Allradantrieb nicht mehr ausschließlich für geländegängige Fahrzeuge verwendet. Die verbesserte Traktion von Allradantriebssträngen ist auch bei normalen Straßenfahrzeugen vorteilhaft.

Generell unterscheidet man bei Allradantriebssträngen zwischen kupplungsgesteuerten und differentialgesteuerten Systemen. Ein differentialgesteuertes System weist ein zentrales Längsdifferential auf, das Antriebsleistung über ein Stufengetriebe von einer Antriebseinheit empfängt und permanent auf die zwei angetriebenen Achsen verteilt. Bei kupplungsgesteuerten Allradantriebssträngen wird generell eine Achse permanent angetrieben, und die zweite Achse wird nach Bedarf zugeschaltet (Hang-on-Systeme).

Bei geländegängigen Fahrzeugen wird die zweite Achse häufig von Hand zugeschaltet. Bei Straßenfahrzeugen erfolgt dies in der Regel über eine selbsttätig schließende Kupplung.

Dabei kamen in der Vergangenheit passive Systeme zum Einsatz, wie beispielsweise eine Viscokupplung oder eine Haldexkupplung. Diese bekannten Systeme arbeiten häufig so, dass die Kupplung als Reaktion auf eine Differenzdrehzahl zwischen der permanent angetriebenen Achse und der nicht permanent angetriebenen Achse geschlossen wird.

Die Einführung von ABS und ESB stellt auch erhöhte Anforderungen an Allradsysteme. Daher wurden aktive Systeme entwickelt, die unabhängig von Differenzdrehzahlen zu jeder Zeit geöffnet oder geschlossen werden können. Dadurch werden die so genannten Störmomente passiver Systeme unterbunden. Bei den aktiven Systemen kommen häufig Reibkupplungen zum Einsatz. Aufgrund der guten Dosierbarkeit und des guten Verschleißverhaltens werden diese häufig als Lamellenkupplungen ausgeführt, insbesondere als nasslaufende Lamellenkupplungen.

Auch bei sportlichen Kraftfahrzeugen, bei denen es auf ein hohes Leistungsgewicht ankommt, hat der Allradantrieb Vorteile, insbesondere hinsichtlich der erzielbaren Beschleunigungswerte.

Die üblichen Allradantriebsstränge leiden jedoch an einem relativ hohen Gesamtgewicht.

Aus dem Dokument WO 2006/100585 A1 ist ein Antriebsstrang für ein Kraftfahrzeug bekannt, der sich für sportliche Fahrzeuge eignet. Dabei ist eine Antriebseinheit in Form eines Verbrennungsmotors über ein Stufengetriebe mit fünf, sechs oder mehr Gangstufen mit einer ersten angetriebenen Achse verbunden (der Hinterachse).

Ferner ist der Ausgang der Antriebseinheit mit einer Zuschaltanordnung in Form einer einzelnen Reibkupplung verbunden, deren Ausgangsglied mit der zweiten angetriebenen Achse verbunden ist. Dabei kann die Zuschaltanordnung entweder mit einem Ausgangsglied einer Anfahr- und Trennkupplung verbunden sein, die zwischen Antriebseinheit und Stufengetriebe angeordnet ist. Alternativ ist es auch möglich, die Zuschaltanordnung direkt mit einer Ausgangswelle der Antriebseinheit (z.B. der Kurbelwelle eines Verbrennungsmotors) zu verbinden. Dies ermöglicht beispielsweise ein Layout, bei dem die Anfahr- und Trennkupplung sowie das Stufengetriebe auf einer ersten axialen Seite mit der Ausgangswelle der Antriebseinheit verbunden sind. Die Zuschaltanordnung ist bei dieser Ausgestaltung auf der anderen axialen Seite mit der Ausgangswelle der Antriebseinheit verbunden.

Die in der Zuschaltanordnung des Antriebsstranges der WO 2006/100585 A1 verwendete Reibkupplung ist dabei über eine Übersetzungsstufe mit der zweiten angetriebenen Achse verbunden, derart, dass die Drehzahl der zweiten angetriebenen geschlossener Reibkupplung der Zuschaltanordnung einer bestimmten Gangstufe des Stufengetriebes entspricht, insbesondere der dritten Gangstufe. Hierdurch ist ein Allradantrieb nur in dieser einen Gangstufe und den darunterliegenden Gangstufen (also beispielsweise der zweiten und ersten Gangstufe) möglich.

Ferner wird das Ausgangsglied der Zuschaltanordnung des Antriebsstranges der WO 2006/100585 A1 mit einem mechanischen Differential der zweiten angetriebenen Achse verbunden. Ein Eingangsglied der Zuschaltanordnung kann über eine Stirnradsatzanordnung mit der Antriebseinheit verbunden sein. Alternativ ist ein Ausgangsglied der Zuschaltanordnung über eine Stirnradsatzanordnung mit einem Eingangsglied der zweiten angetriebenen Achse verbunden. Die Übersetzung der Stirnradsatzanordnung und die Übersetzung des mechanischen Differentials bilden die Gesamtübersetzung, die bestimmt, welcher einzelnen Gangstufe die Zuschaltanordnung zugeordnet ist.

Während das mechanische Differential der ersten angetriebenen Achse als Sperrdifferential ausgebildet sein kann, ist das Differential der zweiten angetriebenen Achse als "offenes" Differential ausgebildet. In dem Dokument WO 2006/100585 A1 wird ferner vorgeschlagen, den Prozentsatz des Antriebsmomentes, der der zweiten angetriebenen Achse zugewiesen wird, gemäß dynamischen Parametern des Kraftfahrzeuges elektronisch zu steuern.

Aus dem Dokument GB 2 230 498 A ist ein Antriebsstrang bekannt, mit einem Motor, der die Hinterräder eines Fahrzeugs über eine Primärkupplung, ein Primärgetriebe und ein hinteres Differential antreibt, wobei die Vorderräder von einer vorderen Seite des Motors über einen Drehmomentwandler, ein zweites Getriebe und ein Frontdifferential angetrieben werden.

Vor dem obigen Hintergrund ist es die Aufgabe der vorliegenden Erfindung, einen verbesserten Antriebsstrang bzw, ein verbessertes Verfahren zum Ansteuern eines Antriebsstranges anzugeben.

Die obige Aufgabe wird bei dem eingangs genannten Antriebsstrang für ein Allradfahrzeug durch die Merkmale des kennzeichnenden Teils vom Anspruch 1 gelöst. Dabei ist es bevorzugt, dass die Zuschaltanordnung eine erste Zuschaltreibkupplung und eine zweite Zuschaltreibkupplung aufweist, die dazu ausgelegt sind, der zweiten Achse Antriebsleistung über eine erste bzw. eine zweite Übersetzungsstufe zuzuführen, wobei die erste Übersetzungsstufe wenigstens einer unteren Gangstufe des Stufengetriebes zugeordnet ist, und wobei die zweite Übersetzungsstufe wenigstens einer höheren Gangstufe des Stufengetriebes zugeordnet ist.

Durch diese Maßnahme ist es zum einen möglich, einen Allradbetrieb des Antriebsstranges über einen größeren Spreizungsbereich des Stufengetriebes durchzuführen, insbesondere in den unteren Gängen und bis hin zu der höheren Gangstufe des Stufengetriebes. Ferner kann der Schlupf zwischen einem Eingangsglied einer jeweils aktiven Zuschaltreibkupplung und dem Ausgangsglied verringert werden. Hierdurch kann die Verlustleistung massiv reduziert werden. Dies ermöglicht längere Aktuierungszeiten der Zuschaltanordnung.

Insgesamt können damit gegebenenfalls auch höhere Drehmomente übertragen werden.

Die Antriebseinheit kann vorliegend eine Kombination von Motor und Anfahr- und Trennkupplung sein. Vorzugsweise umfasst die Antriebseinheit vorliegend jedoch keine solche Anfahr- und Trennkupplung.

Die Aufgabe wird somit vollkommen gelöst.

Von besonderem Vorzug ist es hierbei, wenn die Zuschaltanordnung eine Planetenradsatzanordnung zur Einrichtung der ersten bzw. der zweiten Übersetzungsstufe aufweist.

Durch Verwendung eine Planetenradsatzanordnung kann auf relativ geringem Bauraum eine vergleichsweise große Spreizung zwischen der ersten und der zweiten Übersetzungsstufe eingerichtet werden.

Von Vorteil ist es hierbei ferner, wenn die Planetenradsatzanordnung eine Ravigneau-artige Planetenradsatzanordnung mit einem ersten und einem zweiten Planetenradsatz aufweist, die axial nebeneinander angeordnet sind.

Unter einer Ravigneau-artigen Planetenradsatzanordnung soll vorwiegend eine Planetenradsatzanordnung verstanden werden, bei der wenigstens zwei Glieder der zwei Planetenradsätze starr miteinander verbunden sind.

Dabei ist es bevorzugt, wenn die Planetenradsätze einen gemeinsamen Planetenträger aufweisen.

Insgesamt kann so eine besonders kompakte Übersetzungseinheit realisiert werden, mittels der die erste und die zweite Übersetzungsstufe mit einem weiten Spreizungsbereich einrichtbar sind.

Gemäß einer weiteren bevorzugten Ausführungsform ist der gemeinsame Planetenträger mit dem Ausgangsglied der Zuschaltanordnung verbunden, das mit der zweiten Achse verbunden ist.

Hierdurch kann der Bauraum insbesondere in axialer Richtung weiter verkürzt werden.

Ferner ist es von Vorzug, wenn der erste Planetenradsatz ein Sonnenrad aufweist, das mit einer Eingangswelle der Zuschaltanordnung verbunden ist.

Dies führt zu einer koaxialen Anordnung des ersten Planetenradsatzes zu der Eingangswelle und folglich zu einer radial kompakten Bauweise.

Gemäß einer weiteren bevorzugten Ausführungsform weist der zweite Planetenradsatz ein Sonnenrad auf, das über die erste Zuschaltreibkupplung mit einer Eingangswelle der Zuschaltanordnung verbindbar ist.

Hierdurch kann auf konstruktiv einfache Weise die erste Zuschaltreibkupplung mit den Planetenradsätzen integriert werden. Das Sonnenrad des zweiten Planetenradsatzes ist vorzugsweise ebenfalls konzentrisch zu der Eingangswelle angeordnet. Bevorzugt ist es ferner, wenn der zweite Planetenradsatz ein Sonnenrad aufweist, das über die zweite Zuschaltreibkupplung mit einem Gehäuse der Zuschaltanordnung verbindbar ist.

Diese Ausgestaltung ermöglicht eine konstruktive Vereinfachung hinsichtlich der Integration der zweiten Zuschaltreibkupplung in die Zuschaltanordnung.

Unter einem Gehäuse soll vorliegend jedes Bauteil verstanden werden, das fest mit einem Bauteil verbunden ist, an dem die Eingangswelle und/oder das Ausgangsglied der Zuschaltanordnung gelagert sind.

Vorteilhaft ist es auch, wenn das Sonnenrad des zweiten Planetenradsatzes an einem Hohlwellenabschnitt auf der Eingangswelle der Zuschaltanordnung gelagert ist.

Dies ermöglicht eine axial kompakte Bauweise. Es kann hierbei der zweite Planetenradsatz zwischen einem Eingang der Zuschaltanordnung und dem ersten Planetenradsatz angeordnet sein, so dass die erste und/oder die zweite Zuschaltreibkupplung auf konstruktiv bevorzugte Weise zwischen dem zweiten Planetenradsatz und einem Gehäuseabschnitt der Zuschaltanordnung angeordnet sein kann.

Insgesamt ist es vorteilhaft, wenn der erste Planetenradsatz ein Sonnenrad, ein Hohlrad, eine Mehrzahl von an einem Planetenträger gelagerten Planeten, die mit dem Sonnenrad in Eingriff stehen, und eine Mehrzahl von Stufenplaneten aufweist, die mit den Planeten und dem Hohlrad in Eingriff stehen.

Bei dieser Ausgestaltung des ersten Planetenradsatzes kann auf axial kompaktem Raum eine hohe Übersetzung erzielt werden.

Dabei ist es vorteilhaft, wenn das Hohlrad des ersten Planetenradsatzes über eine dritte Zuschaltreibkupplung mit einem Gehäuse der Zuschaltanordnung verbindbar ist.

Bei dieser Ausführungsform ist es mittels der dritten Zuschaltreibkupplung möglich, am Ausgangsglied der Zuschaltanordnung eine Drehrichtungsumkehr zu erzielen. Dabei kann folglich erreicht werden, dass auch im Rückwärtsgang ein Allradbetrieb möglich ist.

Generell kann eine solche dritte Zuschaltreibkupplung zur Realisierung eines Rückwärtsganges auch auf beliebige andere Weise in der Zuschaltanordnung integriert sein. Bevorzugt wird dabei mittels der dritten Zuschaltreibkupplung eine dritte Übersetzungsstufe eingerichtet, die auf die Übersetzung des Rückwärtsganges in dem Stufengetriebe abgestimmt ist. Die dritte Übersetzungsstufe sollte daher so ausgelegt sein, dass die dritte Zuschaltreibkupplung bei Rückwärtsfahrt im geschlossenen Zustand oder im Schlupfzustand betrieben werden kann.

Gemäß einer weiteren bevorzugten Ausführungsform weist der zweite Planetenradsatz ein Sonnenrad und eine Mehrzahl von an einem Planetenträger gelagerten Planeten auf.

Bei dieser Ausführungsform ist es bevorzugt, dass der zweite Planetenradsatz kein Hohlrad aufweisen muss, so dass radial außerhalb des zweiten Planetenradsatzes Raum für die dritte Zuschaltreibkupplung und/oder eine zugeordnete Aktuatorik vorhanden ist.

Es ist ebenfalls vorteilhaft, wenn die Stufenplaneten des ersten Planetenradsatzes und die Planeten des zweiten Planetenradsatzes miteinander verbunden sind.

Hierdurch lässt sich eine hohe Spreizung zwischen erster und zweiter Übersetzungsstufe realisieren. Zudem kann die Drehrichtungsumkehr auf konstruktiv günstige Weise bei geringem axialem Bauraumbedarf realisiert werden.

Insgesamt ist es vorteilhaft, wenn die erste und die zweite Zuschaltreibkupplung radial ineinander verschachtelt sind.

Hierdurch kann der axiale Bauraumbedarf weiterhin minimiert werden. Zudem ist es, wie oben erwähnt, vorteilhaft, wenn die Reibkupplungen in axialer Richtung zwischen dem zweiten Planetenradsatz und einer eingangsseitigen Wand eines Gehäuses der Zuschaltanordnung angeordnet sind.

Eine weitere bevorzugte Ausführungsform sieht, wie ebenfalls oben erwähnt, vor, dass eine dritte Zuschaltreibkupplung in der Zuschaltanordnung vorgesehen ist, die dazu ausgelegt ist, der zweiten Achse Antriebsleistung in entgegengesetzter Drehrichtung zuzuführen.

Ferner ist es vorteilhaft, wenn eine Eingangswelle der Zuschaltanordnung über eine Dämpfungsanordnung formschlüssig mit der Antriebseinheit verbunden ist.

Durch die Dämpfungsanordnung ist es möglich, von der Antriebseinheit erzeugte Vibrationen am Eingang der Zuschaltanordnung zu dämpfen. Ferner können hierdurch Unwuchten von einer oder mehrerer der Zuschaltreibkupplungen kompensiert werden, die ansonsten nur durch sehr enge Toleranzen oder eine Auswuchtprozedur in der Fertigung gelöst werden könnten.

Dabei ist es vorteilhaft, wenn die Dämpfungsanordnung eine Klauenkupplung mit integrierten Dämpfermitteln aufweist.

Auf diese Weise kann zum einen der Formschluss zwischen der Antriebseinheit und der Zuschaltanordnung gewährleistet werden. Durch die integrierten Dämpfermittel ist eine kompakte Bauform realisierbar.

Von besonderem Vorzug ist es ferner, wenn die Klauenkupplung permanent geschlossen ist.

Generell ist es zwar denkbar, die Klauenkupplung als Trennkupplung auszuführen. Hierdurch könnten Einflüsse der Antriebseinheit auf die Zuschaltanordnung bei reinem Zweiradbetrieb vollständig vermieden werden. Bevorzugt ist die Klauenkupplung jedoch ständig geschlossen, und Antriebseinflüsse der Antriebseinheit werden über die Dämpfermittel (beispielsweise in Form eines oder mehrerer Elastomerdämpferelemente) gedämpft.

Gemäß einer weiteren bevorzugten Ausführungsform weist die Zuschaltanordnung ein Gehäuse auf, das eine Eingangswelle, die Zuschaltreibkupplungen, eine Planetenradsatzanordnung und das konzentrisch zur Eingangswelle angeordnete Ausgangsglied aufweist.

Insgesamt kann auf diese Weise eine radial und axial kompakte Zuschaltanordnung realisiert werden.

Gemäß einer weiteren bevorzugten Ausführungsform nimmt das Gehäuse ferner eine Einrichtung zur Verteilung der über die Zuschaltanordnung der zweiten Achse zugeführten Leistung auf die zwei Räder der zweiten Achse auf.

Auf diese Weise ist es möglich, die Zuschaltanordnung mit einer solchen Leistungsverteilungseinrichtung zu kombinieren, so dass der Antrieb der zweiten Achse sich mittels einer kompakten und auf einfache Weise in den Antriebsstrang integrierbaren Einrichtung realisieren lässt. Die Einrichtung zur Verteilung der Antriebsleistung auf die zwei Räder der zweiten Achse kann dabei generell als herkömmliches mechanisches Differential ausgebildet sein. Erfindungsgemäss weist die zweite angetriebene Achse eine erste Achsreibkupplung und eine zweite Achsreibkupplung auf, die ein gemeinsames Eingangsglied aufweisen und deren Ausgangsglieder jeweils mit einer Antriebswelle für ein linkes bzw. ein rechtes Rad der zweiten Achse verbunden sind, wobei die erste und die zweite Achsreibkupplung unabhängig voneinander ansteuerbar sind.

Der besondere Vorteil dieser Ausführungsform liegt darin, dass auf diese Weise sehr günstig ein so genanntes Active-Yaw-System eingerichtet werden kann, das es erlaubt, bei einer Kurvenfahrt gezielt Drehmoment auf die Antriebsräder zu verteilen, um die Fahrdynamik zu verbessern. Ferner lässt sich über ein solches Konzept eine Quersperre an der zweiten Achse einrichten.

Active-Yaw-Systeme (auch als Torque-Vectoring-Systeme bezeichnet) ermöglichen die gezielte Zuweisung von Antriebsmoment auf die Räder einer Achse, so dass aufgrund der unterschiedlichen Radumfangskräfte ein Giermoment um die Fahrzeughochachse herum wirkt. Verbunden mit einem elektronischen Fahrdynamik-Regelsystem, das über entsprechende Sensorik die aktuelle Fahrsituation erkennt, kann gezielt ein Über- oder Untersteuern des Fahrverhaltens eingerichtet oder auch vermieden werden.

Während ESP-Systeme das Giermoment um die Fahrzeughochachse herum bewirken können, indem gezielt einzelne Räder abgebremst werden, wird bei einem Active-Yaw-System gezielt Antriebsmoment auf die Räder einer Achse verteilt. Demzufolge kann die Beeinflussung des Drehmomentes zu einer deutlichen Verbesserung der Fahrdynamik führen, um letztlich gerade bei sportlichen Fahrzeugen den Fahrspaß zu erhöhen.

Dabei versteht sich, dass dann, wenn das Active-Yaw-System durch gezielte Einflussnahme der Achsreibkupplungen nicht in der Lage ist, ein bestimmtes Fahrverhalten zu erzeugen, als untergeordnete Lösung nach wie vor ein ESP-System zum Einsatz kommen kann.

Generell ist es zwar möglich, ein solches Achsgetriebe, das eine erste Achsreibkupplung und eine zweite Achsreibkupplung aufweist, so vorzusehen, dass jeder Reibkupplung noch eine Übersetzungsstufe zugeordnet ist. Derartige Systeme werden bereits seit einiger Zeit verwendet, beispielsweise von der Firma Honda unter der Bezeichnung SH-AWD.

Vorliegend ist es jedoch besonders bevorzugt, wenn das Achsgetriebe lediglich einen Winkeltrieb aufweist, mit einem Tellerrad, das mit einem Eingangsglied der zwei Achsreibkupplungen verbunden ist. Die Ausgangsglieder der zwei Achsreibkupplungen sind dabei jeweils direkt mit den jeweiligen Antriebswellen verbunden.

Bei einer solchen Ausgestaltung kann ein Active-Yaw-Konzept konstruktiv und gewichtsmäßig mit geringem Aufwand realisiert werden. Erfindungsgemäss sind die zwei Achsreibkupplungen in Achsrichtung auf der gleichen Seite in Bezug auf einen solchen Winkeltrieb angeordnet, der die zweite Achse mit der Zuschaltanordnung verbindet. Auf diese Weise können die Achsreibkupplungen und deren Aktuatorik kompakt ausgebildet werden.

Dabei ist es ebenfalls vorteilhaft, wenn das gemeinsame Eingangsglied ein gemeinsamer Lamellenträger ist, wobei die Achsreibkupplungen als Lamellenkupplungen, insbesondere als nasslaufende Lamellenkupplungen, ausgebildet sind.

Gemäß einer weiteren bevorzugten Ausführungsform sind die Übersetzungen, die zum einen mittels der Zuschaltreibkupplungen und zum anderen mittels der jeweils zugeordneten Gangstufe des Stufengetriebes eingerichtet werden, so gewählt, dass die Drehzahl der vorderen Achse um 5 % bis 15 % höher ist als eine Referenzdrehzahl. Durch diese Ausgestaltung kann auch in engen Kurven noch positives Antriebsmoment über das kurvenäußere Rad erzeugt werden.

Die Drehzahldifferenz kann dabei in vergleichsweise einfacher Weise über die Übersetzungsstufen der Zuschaltanordnung eingerichtet werden.

Zudem ist eine solche Drehzahldifferenz in vielen Situationen auch deswegen vergleichsweise einfach einrichtbar (auch wenn die Übersetzungsstufen der Zuschaltanordnung nicht entsprechend ausgelegt sind), da die Zuschaltreibkupplungen in vielen Fahrsituationen ohnehin im Schlupfbetrieb betrieben werden, so dass es durch geeignete Ansteuerung gegebenenfalls möglich ist, auf der Ausgangsseite der Zuschaltreibkupplung eine im Vergleich zur Hinterachse höhere Drehzahl zu erzeugen. Die Referenzdrehzahl kann eine mittlere Radgeschwindigkeit aller Räder des Fahrzeuges sein, kann jedoch beispielsweise auch die Drehzahl der Räder der Hinterachse sein.

Erfindungsgemäß wird die obige Aufgabe ferner gelöst durch ein Verfahren gemäss Anspruch 14. Durch die Maßnahme, bei Einrichten des Allradbetriebes an der Vorderachse eine Drehzahl einzurichten, die größer oder gleich der Drehzahl der Hinterachse oder einer sonstigen Referenzdrehzahl ist, kann erreicht werden, dass bei Kurvenfahrten der größere Kurvenradius der Vorderachse, insbesondere des kurvenäußeren Rades, kompensiert werden kann. Mit anderen Worten kann auch in engen Kurven Antriebsmoment mit der richtigen Drehzahl an das kurvenäußere Rad der zweiten Achse geleitet werden, um so das Gierverhalten des Fahrzeugs aktiv zu beeinflussen.

Insgesamt versteht sich, dass die vorliegende Erfindung auf nahezu jede Art von Antriebsstrang eines Kraftfahrzeuges anwendbar ist, beispielsweise auf Fahrzeuge mit Mittelmotor, die permanent an der Hinterachse angetrieben werden, und bei denen die Vorderachse über eine Zuschaltanordnung nach Bedarf zugeschaltet wird. Bevorzugt findet die Erfindung bei solchen Antriebssträngen Anwendung, bei denen die Antriebseinheit in Längsrichtung eingebaut ist. Hierbei ist es bevorzugt möglich, Antriebsleistung von der Antriebseinheit auf einer axialen Seite für die erste Achse und auf der anderen axialen Seite für die zweite Achse abzugreifen.

Generell ist es jedoch auch möglich, die Antriebsleistung auf der gleichen axialen Seite der Antriebseinheit abzunehmen, und die Antriebsleistung vor oder hinter einer Anfahr- oder Trennkupplung an die zweite Achse abzuzweigen, jedenfalls vor einem Eingang des Stufengetriebes. Die Antriebseinheit kann beispielsweise auch vorne im Fahrzeug oder hinten im Fahrzeug angeordnet werden.

Ferner ist es generell möglich, nicht nur das Achsgetriebe der zweiten Achse mit zwei unabhängig voneinander betätigbaren Achsreibkupplungen auszustatten. Generell ist es auch denkbar, eine ähnliche Achsreibkupplungsanordnung an der ersten Achse vorzusehen, obgleich es dort natürlich auch möglich ist, ein herkömmliches Achsdifferentialgetriebe bereitzustellen.

Insgesamt lässt sich mit der vorliegenden Erfindung in den verschiedenen Ausführungsformen wenigstens einer der folgenden Vorteile erzielen: Zum einen können niedrigere Verlustleistungen bei der Aktuierung der Zuschaltreibkupplungen und/oder der Aktuierung der Achsreibkupplungen erzielt werden. Für die Zuschaltreibkupplungen und/oder die Achsreibkupplungen können zudem längere Aktuierungszeiten erzielt werden. An der zweiten Achse lässt sich unter jeglicher Fahrbahnbedingung eine bessere Ausnutzung des Traktionsvermögens realisieren. Ferner lässt sich eine erweiterte Funktionalität des Antriebsstranges erzielen, insbesondere mit einer Active-Yaw-Anordnung an der zweiten Achse.

Bei Verwendung der zwei Achsreibkupplungen wird die Verlustleistung pro Kupplung durch die Einführung der zweiten Kupplung ungefähr halbiert, was wiederum längere Aktuierungszeiten erlaubt. Zudem ist die Ausnutzung des vollen Traktionspotentials der Sekundärachse unabhängig von unterschiedlichen Traktionspotentialen zwischen links und rechts möglich. Bei Betätigung von beiden Achsreibkupplungen lässt sich zudem ein Quersperrzustand erzeugen.

Hinzu kommt, dass das Stufengetriebe aufgrund der zumindest zeitweiligen Zuweisung von Antriebsleistung auf die zweite Achse in entsprechendem Umfang geschont wird. Das Stufengetriebe kann daher gegebenenfalls kleiner dimensioniert werden.

Durch die Verwendung von zwei unterschiedlichen Übersetzungsstufen in der Zuschaltanordnung kann der Schlupf in den Zuschaltreibkupplungen verringert werden. Die Verlustleistung kann hierdurch massiv reduziert werden. Dies ermöglicht längere Aktuierungszeiten der Zuschaltanordnung.

Da bei der bevorzugten Ausgestaltung der zwei Achsreibkupplungen das Eingangsglied der Achsreibkupplungen zumindest ungefähr auf dem Niveau der Drehzahlen an der zweiten Achse rotiert, können unwuchtrelevante Toleranzen großzügiger gefasst werden.

Über die Ravigneau-artige Planetenradsatzanordnung gepaart mit den zwei Zuschaltreibkupplungen können eine Neutralstellung, zwei Vorwärtsgänge und ein Rückwärtsgang konstruktiv auf sehr geringem Bauraum realisiert werden.

Es versteht sich, dass die Zuschaltreibkupplungen und/oder die Achsreibkupplungen elektronisch angesteuert werden. Die hierzu verwendeten Aktuatoren können elektromagnetische oder elektromechanische Aktuatoren sein, können jedoch insbesondere als elektrisch betätigte Hydraulikaktuatoren ausgebildet sein. Die hierzu benötigten elektrischen Signale werden von einem Steuergerät erzeugt und über Leistungsstufen aufbereitet.

Da die Zuschaltanordnung bei nichtbetätigten Zuschaltreibkupplungen eine Neutralstellung ermöglicht, kann die Ausgangsseite der Zuschaltanordnung von der Antriebsseite weitgehend entkoppelt werden. Hierdurch können Massenträgheiten im Antriebsstrang im Zweiradbetrieb reduziert werden. Dies kann auch zu einer Reduzierung der CO₂-Emissionen führen, da weniger Bauteile rotieren müssen.

Es versteht sich, dass anstelle von zwei Zuschaltreibkupplungen auch drei oder mehr Zuschaltreibkupplungen in der Zuschaltanordnung vorgesehen werden können. Die Verwendung von genau zwei Zuschaltreibkupplungen wird zwar derzeit als optimale Lösung betrachtet, da zum einen eine vergleichsweise hohe Spreizung und die Zuordnung zu zwei unterschiedlichen Gangstufen des Stufengetriebes erzielt werden kann. Bei Bereitstellung von mehr Bauraum und der Möglichkeit, ein höheres Gewicht zu transportieren, können jedoch auch mehr Zuschaltreibkupplungen vorgesehen werden, die dann jeweils unterschiedlichen Gangstufen des Stufengetriebes zugeordnet werden. Hierbei könnte der jeweils erforderliche Schlupf beim Betrieb der Zuschaltanordnung in anderen Gangstufen des Stufengetriebes erheblich reduziert werden.

Die Antriebseinheit kann ein herkömmlicher Verbrennungsmotor sein. Die Antriebseinheit kann jedoch auch als Hybrid-Antriebseinheit ausgebildet sein oder auch als reiner Elektromotor. Das Stufengetriebe soll dazu in der Lage sein, den Drehzahlbereich des Motors an den Fahrgeschwindigkeitsbereich des Fahrzeuges anzupassen. Heutige Stufengetriebe haben fünf, sechs, sieben oder mehr Gangstufen. Mit diesen Gangstufen wird eine vergleichsweise hohe Spreizung erzielt. Das Stufengetriebe kann ein Allradgetriebe wie ein manuelles Schaltgetriebe, ein automatisiertes Schaltgetriebe oder ein Doppelkupplungsgetriebe sein. Das Stufengetriebe kann jedoch auch ein Automatikgetriebe wie ein Wandlerautomat sein. Ferner kann jedoch auch in Betracht gezogen werden, anstelle eines Stufengetriebes ein stufenloses Getriebe vorzusehen, das zumindest über eine vergleichbare Spreizung verfügt (wie beispielsweise ein CVT-Getriebe oder ein Toroidgetriebe). Der Begriff des Stufengetriebes ist daher vorliegend breit zu verstehen und umfasst auch solche Getriebe, die eine unendliche Anzahl von "Gangstufen" einrichten können, also auch stufenlose Getriebe.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Draufsicht auf ein Fahrzeug mit einem Antriebsstrang gemäß einer Ausführungsform der vorliegenden Erfindung;
- Fig. 1a: eine schematische Darstellung einer Zuschaltanordnung des Antriebsstranges der Fig. 1;
- Fig. 2: ein Getriebeschema einer beispielhaften Zuschaltanordnung und eines Achsgetriebes eines erfindungsgemäßen Antriebsstranges;
- Fig. 3: eine schematische Ansicht auf eine Ausführungsform eines erfindungsgemäßen Antriebsstranges von vorne;
- Fig. 4: eine Schnittansicht entlang der Linie IV-IV der Fig. 3; und
- Fig. 5: eine Schnittansicht entlang der Linie V-V der Fig. 3.

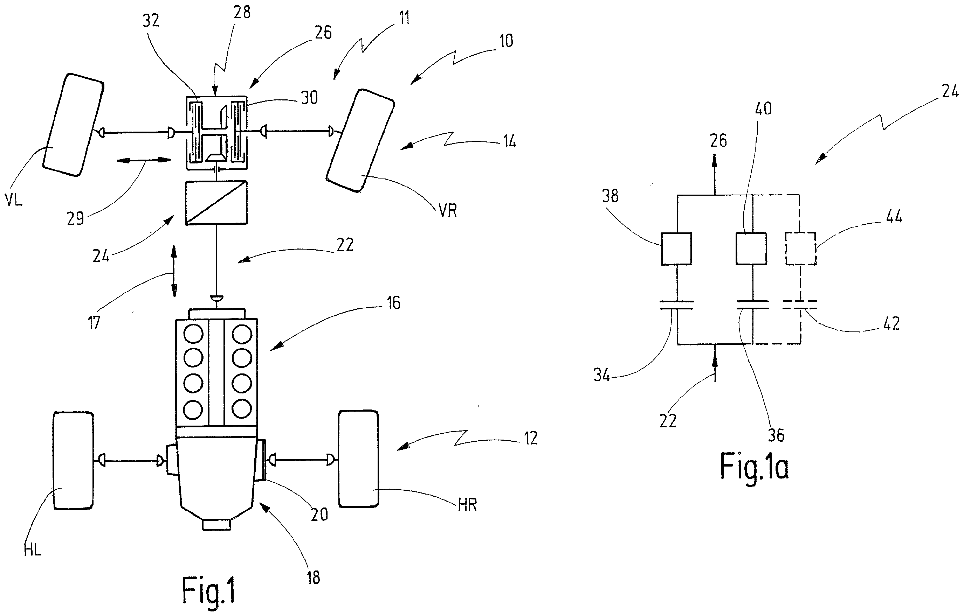

In Fig. 1 ist in schematischer Draufsicht ein Kraftfahrzeug generell mit 10 bezeichnet. Das Kraftfahrzeug 10 kann beispielsweise als sportliches Fahrzeug ausgelegt sein und weist einen Antriebsstrang 11 auf.

Der Antriebsstrang 11 beinhaltet eine erste angetriebene Achse 12 und eine zweite angetriebene Achse 14. Im vorliegenden Fall ist die erste angetriebene Achse 12 die Hinterachse, die zwei Räder HL, HR aufweist. Die Räder der zweiten angetriebenen Achse 14 sind mit VL, VR bezeichnet.

Der Antriebsstrang 11 weist ferner eine Antriebseinheit 16 auf, die in dem Kraftfahrzeug in Längsrichtung 17 eingebaut ist, und zwar zwischen der ersten Achse 12 und der zweiten Achse 14. Das Fahrzeug 10 ist bei dieser Ausführungsform als Mittelmotorfahrzeug ausgebildet.

Die Antriebseinheit 16 ist an ihrem hinteren Längsende mit einem Stufengetriebe 18 verbunden. Das Stufengetriebe 18 liegt folglich in Antriebsrichtung hinter der Antriebseinheit 16. Das Stufengetriebe 18 kann beispielsweise fünf, sechs, sieben, acht oder mehr Gangstufen aufweisen und als manuelles Schaltgetriebe, als automatisiertes Schaltgetriebe oder als Doppelkupplungsgetriebe ausgebildet sein. Hierbei ist zwischen der Antriebseinheit 16 und dem Getriebe 18 wenigstens eine Anfahr- und Trennkupplung (nicht näher bezeichnet) vorgesehen. Auch eine Ausbildung als Wandlerautomatgetriebe ist generell denkbar. Generell kann anstelle eines Stufengetriebes 18 auch ein stufenloses Getriebe wie ein CVT-Getriebe oder ein Toroidgetriebe etc. verwendet werden. Jedenfalls sollte das Getriebe 18 eine relativ große Spreizung aufweisen, um für den sportlichen Charakter des Fahrzeugs 10 hohe Beschleunigungswerte und hohe Endgeschwindigkeiten realisieren zu können.

An einem vorderen Ende der Antriebseinheit 16 ist eine Kardanwelle 22 angeschlossen, die mit einer Zuschaltanordnung 24 verbunden ist. Die Kardanwelle 22 kann beispielsweise direkt mit der Kurbelwelle der Antriebseinheit 16 verbunden sein.

Die Zuschaltanordnung 24 ist dazu ausgelegt, in bestimmten Fahrsituationen einen Allradbetrieb einzurichten, in dem Antriebsleistung von der Antriebseinheit 16 über die Kardanwelle 22 und die Zuschaltanordnung 24 auf ein Achsgetriebe 26 der zweiten angetriebenen Achse 14 geführt wird.

Das Achsgetriebe 26 kann ein herkömmliches Differentialgetriebe sein, ist jedoch im vorliegenden Fall als Twin-Kupplungseinheit ausgebildet. Das Achsgetriebe 26 beinhaltet einen Winkeltrieb 18, mittels dessen die Antriebsleistung von der Zuschaltanordnung 24 in Querrichtung 29 des Fahrzeugs 10 umgeleitet wird. Ferner beinhaltet das Achsgetriebe 26 eine erste Achsreibkupplung 30 und eine zweite Achsreibkupplung 32. Die zwei Achsreibkupplungen 30, 32 weisen ein gemeinsames Eingangsglied auf, das mit dem Winkeltrieb 28 verbunden ist. Das Ausgangsglied der ersten Achsreibkupplung 30 ist mit dem rechten Vorderrad VR verbunden. Das Ausgangsglied der zweiten Achsreibkupplung 32 ist mit dem linken Vorderrad VL verbunden. Die Verbindung erfolgt jeweils über nicht näher bezeichnete Antriebswellen.

Die zwei Achsreibkupplungen 30, 32 sind unabhängig voneinander ansteuerbar. Eine hierzu verwendete elektronische Steuereinheit ist aus Übersichtsgründen in Fig. 1 nicht dargestellt. Ferner sind die zwei Achsreibkupplungen 30, 32 vorzugsweise als nasslaufende Lamellenkupplungen ausgebildet. Da die Achsreibkupplungen 30, 32 nach Bedarf überwiegend im Schlupf betrieben werden, kann folglich die hierdurch entstehende Verlustleistung über das Fluid (Öl) abgeleitet werden. Es versteht sich, dass hierzu vorzugsweise eine elektrische Ölpumpe vorhanden ist, die in Fig. 1 jedoch nicht dargestellt ist. Ferner kann ein Ölkühler vorgesehen sein, der in Fig. 1 ebenfalls aus Übersichtsgründen nicht dargestellt ist.

Die generelle Funktionsweise dieses Antriebsstranges ist wie folgt. Antriebsleistung wird permanent an das Stufengetriebe 18 abgegeben, so dass die erste angetriebene Achse 12 permanent angetrieben ist.

Die zweite angetriebene Achse 14 wird bei Bedarf angetrieben. Zu diesem Zweck ist in der Zuschaltanordnung 24 wenigstens eine Reibkupplung vorgesehen, die automatisiert von einer elektronischen Steuereinheit betätigt wird, um die zweite Achse 14 nach Bedarf zuzuschalten. Dies kann beispielsweise erfolgen, wenn eine Differenzdrehzahl zwischen der ersten und der zweiten Achse 12, 14 auftritt oder aufzutreten droht.

Die Zuschaltreibkupplung in der Zuschaltanordnung 24 ist dabei einer bestimmten Gangstufe des Stufengetriebes 18 zugeordnet (bzw. einer bestimmten Übersetzung des Getriebes 18). Sofern das Getriebe 18 in dieser Gangstufe gefahren wird, kann die Zuschaltanordnung 24 vollständig geschlossen werden, so dass die erste Achse 12 und die zweite Achse 14 mit gleicher Geschwindigkeit bzw. gleicher Drehzahl angetrieben werden.

Sofern eine Gangstufe unterhalb der vorbestimmten Gangstufe ausgewählt ist, ist es aufgrund der höheren Drehzahl dann notwendig, die Zuschaltreibkupplung 24 im Schlupfzustand zu betreiben. Alternativ oder zusätzlich ist es möglich, die zwei Achsreibkupplungen 30, 32 im Schlupfzustand zu betreiben, um Verspannungen des Antriebsstranges zu vermeiden.

Ein Allradantrieb ist bei diesem Layout des Antriebsstranges 11 in Gangstufen oberhalb der vorbestimmten Gangstufe nicht möglich.

In einer Ausführungsform ist die vorbestimmte Gangstufe beispielsweise die dritte Gangstufe, so dass ein Allradbetrieb in den Gangstufen 1, 2 und 3 möglich ist. In den Gangstufen 4 und darüber ist hingegen nur ein Zweiradbetrieb über die erste angetriebene Achse 12 möglich.

Durch die Ausbildung des Achsgetriebes 26 mit einer Twin-Kupplung 30, 32 ist es zudem möglich, die Antriebsleistung nach Bedarf auf die zwei Räder der zweiten Achse 14 zu verteilen. Beispielsweise kann in einer Kurvenfahrt nach rechts dem kurvenäußeren Rad (in diesem Fall also dem linken Vorderrad VL) mehr Antriebsleistung bzw. Moment zugeteilt werden als dem kurveninneren Rad, um ein Eindrehen des Fahrzeugs 10 in die Kurve zu fördern. Durch die Auswertung von Signalen über den Zustand des Fahrzeugs 10 ist es zudem möglich, Bewegungen des Fahrzeugs während der Fahrt um die Hochachse (um die Gierachse) herum zu beeinflussen, also ein Unter- oder Übersteuern gezielt hervorzurufen oder zu kompensieren. Es versteht sich dabei, dass zusätzlich hierzu eine Einflussnahme auf das Gierverhalten durch ein ESP-System möglich ist.

Nachstehend werden weitere bevorzugte Ausführungsformen von erfindungsgemäßen Antriebssträngen vorgestellt. Diese entsprechen generell hinsichtlich Aufbau und Funktionsweise dem Antriebsstrang 11 der Fig. 1. Im Folgenden werden lediglich Unterschiede erläutert.

In Fig. 1a ist eine schematische Darstellung einer bevorzugten Ausführungsform einer Zuschaltanordnung 24 gezeigt.

Die Zuschaltanordnung 24 weist eine erste Zuschaltreibkupplung 34 und eine zweite Zuschaltreibkupplung 36 auf. Der ersten Zuschaltreibkupplung 34 ist eine erste Übersetzungsstufe 38 zugeordnet. Der zweiten Zuschaltreibkupplung 36 ist eine zweite Übersetzungsstufe 40 zugeordnet.

Bei dieser Ausführungsform ist die Zuschaltanordnung 24 folglich zweistufig ausgebildet. Die erste Zuschaltreibkupplung 34 mit der ersten Übersetzungsstufe 38 kann einer ersten Gangstufe des Stufengetriebes 18 zugeordnet werden (beispielsweise der zweiten Gangstufe). Die zweite Zuschaltreibkupplung 36 mit der zweiten Übersetzungsstufe 40 kann einer weiteren Gangstufe des Stufengetriebes 18 zugeordnet werden (beispielsweise der vierten Gangstufe).

Die Zuschaltreibkupplungen 34, 36 werden alternativ betätigt. Wenn ein Allradbetrieb eingerichtet werden soll, während das Stufengetriebe 18 in den Gangstufen 1 oder 2 ist, wird die erste Zuschaltreibkupplung 34 betätigt. Wenn ein Allradantrieb in den Gangstufen 3 und 4 des Stufengetriebes 18 erforderlich ist, wird die zweite Zuschaltreibkupplung 36 betätigt. Durch die zweistufige Ausgestaltung der Zuschaltanordnung 24 kann der Schlupf in den Zuschaltreibkupplungen 34, 36 verringert werden, so dass die Verlustleistung massiv reduziert werden kann. Ferner sind hierdurch längere Aktuierungszeiten möglich, so dass ein Allradbetrieb über längere Zeitspannen möglich ist.

In Fig. 1a ist ferner in gestrichelter Darstellung eine dritte Zuschaltreibkupplung 42 mit einer zugeordneten dritten Übersetzungsstufe 44 gezeigt. Die dritte Zuschaltreibkupplung 42 ist optional vorgesehen und kann beispielsweise einer Rückwärtsgangstufe des Stufengetriebes 18 zugeordnet sein. Folglich kann ein Allradbetrieb auch während der Rückwärtsfahrt des Kraftfahrzeuges 10 eingerichtet werden.

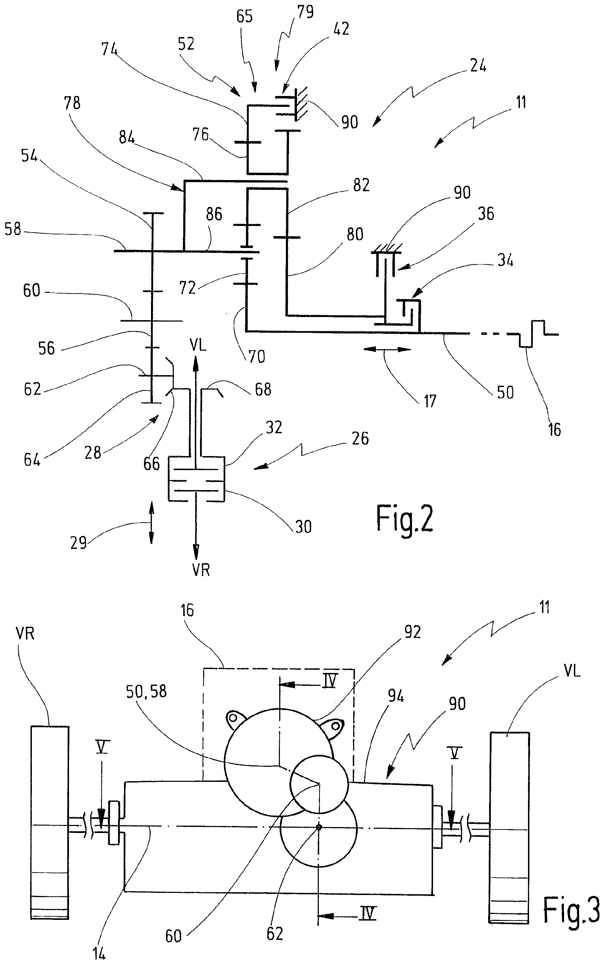

In den folgenden Figuren 2 bis 4 ist eine bevorzugte Ausführungsform einer solchen zweistufigen Zuschaltanordnung 24 dargestellt.

Fig. 2 zeigt, dass die Zuschaltanordnung 24 eine Eingangswelle 50 aufweist, die drehfest mit einer Abtriebswelle der Antriebseinheit 16 verbunden ist. Die Zuschaltanordnung 24 weist eine Ravigneau-artige Planetenradsatzanordnung 52 auf, die mit der Eingangswelle 50 verbunden ist. Ferner weist die Zuschaltanordnung 24 ein Ausgangsglied 54 auf. Dieses ist in der schematischen Darstellung der Fig. 2 radial versetzt gegenüber der Eingangswelle 50 dargestellt. Bevorzugt ist das Ausgangsglied 54 jedoch konzentrisch hierzu angeordnet. Das Ausgangsglied 54 ist an einer Ausgangswelle 58 der Zuschaltanordnung 24 festgelegt und steht in Eingriff mit einem Zwischenrad 56, das an einer Zwischenwelle 60 festgelegt ist.

Das Zwischenrad 56 steht in Eingriff mit einem Winkeltriebstirnrad 64 des Winkeltriebs 28, das an einer Winkeltriebwelle 62 festgelegt ist, die parallel zu der Ausgangswelle 58 und der Zwischenwelle 60 ausgerichtet ist.

Der Winkeltrieb 28 beinhaltet ferner ein Ritzel 66, das an der Winkeltriebwelle 62 festgelegt ist und mit einem Tellerrad 68 in Eingriff steht. Das Tellerrad 68 ist um eine Drehachse verdrehbar gelagert, die parallel zu der Querrichtung 29 ausgerichtet ist. Das Tellerrad 68 bildet ein Eingangsglied für die zwei Achsreibkupplungen 30, 32 bzw. ist mit einem Eingangsglied starr verbunden.

Die Planetenradsatzanordnung 52 beinhaltet einen ersten Planetenradsatz 65. Der erste Planetenradsatz 65 beinhaltet ein Sonnenrad 70, das drehfest mit der Eingangswelle 50 der Zuschaltanordnung 24 verbunden ist. Ferner weist der erste Planetenradsatz 65 eine Mehrzahl von Planeten 72 auf, die an einem Planetenträger 78 verdrehbar gelagert sind. Eine weitere Mehrzahl von Stufenplaneten 76 sind radial außerhalb der Planeten 72 angeordnet und stehen in Eingriff mit den Planeten 72 einerseits und einem Hohlrad 74 des ersten Planetenradsatzes 65 andererseits. Die Stufenplaneten 76 sind ebenfalls an dem Planetenträger 78 drehbar gelagert.

Der Planetenträger 78 ist drehfest mit der Ausgangswelle 58 verbunden.

Die Planetenradsatzanordnung 52 weist ferner einen zweiten Planetenradsatz 79 auf, dessen Sonnenrad 80 auf einem Hohlwellenabschnitt um die Eingangswelle 50 herum gelagert ist. Der zweite Planetenradsatz 79 beinhaltet ferner eine Mehrzahl von Planeten 82, die mit dem Sonnenrad 80 in Eingriff stehen. Die Planeten 82 sind starr mit den Stufenplaneten 76 verbunden. Die Planeten 82 mit den Stufenplaneten 76 sind an ersten Lagerzapfen 84 des Planetenträgers 78 drehbar gelagert. Die Planeten 72 des ersten Planetenradsatzes 65 sind an parallel hierzu versetzt angeordneten Lagerzapfen 86 des Planetenträgers 78 drehbar gelagert.

Die Zuschaltanordnung 24 weist ferner die erste Zuschaltreibkupplung 34 auf, die dazu ausgelegt ist, die Eingangswelle 50 mit dem Sonnenrad 80 des zweiten Planetenradsatzes 79 zu verbinden. Ferner beinhaltet die Zuschaltanordnung 24 die zweite Zuschaltreibkupplung 36, die dazu ausgelegt ist, das Sonnenrad 80 des zweiten Planetenradsatzes 79 mit einem Gehäuse der Zuschaltanordnung 24 zu verbinden. Schließlich beinhaltet die Zuschaltanordnung 24 die dritte Zuschaltreibkupplung 42, die dazu ausgelegt ist, das Hohlrad 74 des ersten Planetenradsatzes 65 mit dem Gehäuse 90 zu verbinden.

Zur Funktionsweise der Zuschaltanordnung 24 ist Folgendes festzuhalten. Wenn die drei Zuschaltreibkupplungen 34, 36, 42 geöffnet sind, ergibt sich eine Neutralstellung. In diesem Zustand wird kein nennenswertes Drehmoment über die Planetenradsatzanordnung 52 aufgebaut, so dass das Kraftfahrzeug 10 im Wesentlichen im Zweiradmodus fährt.

Wenn die erste Zuschaltreibkupplung 34 betätigt wird, werden die zwei Sonnenräder 70, 80 der zwei Planetenradsätze 65, 79 gegeneinander verblockt. Hierdurch wird eine Übersetzung von i = 1 eingerichtet. Die der zweiten Gangstufe entsprechende Übersetzung wird dann durch die Radsatzanordnung des Ausgangsgliedes 54, des Zwischenrades 56 sowie des Winkeltriebs 28 eingerichtet.

Wenn alternativ hierzu die zweite Zuschaltreibkupplung 36 betätigt wird, die als Bremse auf das Sonnenrad 80 des zweiten Planetenradsatzes 79 wirkt, wird eine Übersetzung realisiert, die so gewählt ist, dass gemeinsam mit der Stirnradsatzanordnung 54, 56, 28 eine Gesamtübersetzung hin zu der zweiten angetriebenen Achse 14 eingerichtet wird, die der vierten Gangstufe des Stufengetriebes 18 entspricht.

Durch Wahl der Zähnezahlen in der Planetenradsatzanordnung 52 ist diese zweite Übersetzung in einem weiten Bereich wählbar. Daher sind bei gleichem Radsatzaufbau der ersten und der zweiten Zuschaltreibkupplung 34, 36 auch andere Gangstufen des Stufengetriebes 18 zuweisbar als die oben beispielhaft erwähnten Gangstufen zwei und vier.

Die dritte Zuschaltreibkupplung 42 ist ebenfalls als Bremse zum Festsetzen des Hohlrades 74 gegen das Gehäuse 90 ausgelegt. Hierdurch wird ein Rückwärtsgang eingerichtet. Auch hier ist die Übersetzung in einem relativ weiten Bereich durch die Auswahl der Zähnezahlen wählbar.

Sofern wenigstens zwei der Zuschaltreibkupplungen 34, 36, 42 betätigt werden, wird die Planetenradsatzanordnung 52 zum Gehäuse 90 festgesetzt (ähnlich einer Parksperre).

Die Zuschaltreibkupplungen 34, 36, 42 sind vorzugsweise als Mehrlamellenkupplungen ausgeführt, insbesondere als nasslaufende Mehrlamellenkupplungen.

Mit den drei Zuschaltreibkupplungen 34, 36, 42 können folglich fünf Zustände eingerichtet werden, wie oben beschrieben.

Fig. 3 zeigt eine schematische Ansicht des Antriebsstranges 11 von vorne. Im Hintergrund ist die Antriebseinheit 16 erkennbar. Das Gehäuse 90 weist ein erstes Teilgehäuse 92 auf, das der Zuschaltanordnung 24 zugeordnet ist, und weist ein zweites Teilgehäuse 94 auf, das dem Achsgetriebe 20 zugeordnet ist. Die Teilgehäuse 92, 94 können untereinander verbunden sein. Ferner ist es auch möglich, den Ölhaushalt für die jeweiligen Reibkupplungen 34, 36, 42 bzw. 30, 32 aus einem gemeinsamen Ölsumpf einzurichten, der vorzugsweise in dem weiter unten gelegenen zweiten Teilgehäuse 94 eingerichtet ist.

Das erste Teilgehäuse 92 weist einen Abschnitt auf, der im Wesentlichen konzentrisch ist zu der Eingangswelle 50, die wiederum vorzugsweise konzentrisch ausgerichtet ist zu einer Abtriebswelle der Antriebseinheit 16. Ferner beinhaltet das erste Teilgehäuse 92 einen Abschnitt, in dem das Zwischenrad 56 aufgenommen ist, dessen Zwischenwelle 60 etwas unterhalb und vorzugsweise seitlich leicht versetzt gegenüber den konzentrischen Wellen 50, 58 angeordnet ist. Das zweite Teilgehäuse 94 beinhaltet einen Abschnitt, in dem die Winkeltriebwelle 62 aufgenommen ist. Die Winkeltriebwelle 62 ist vorzugsweise unterhalb der Zwischenwelle 60 angeordnet und ist auf einer Höhe mit der zweiten angetriebenen Achse 14.

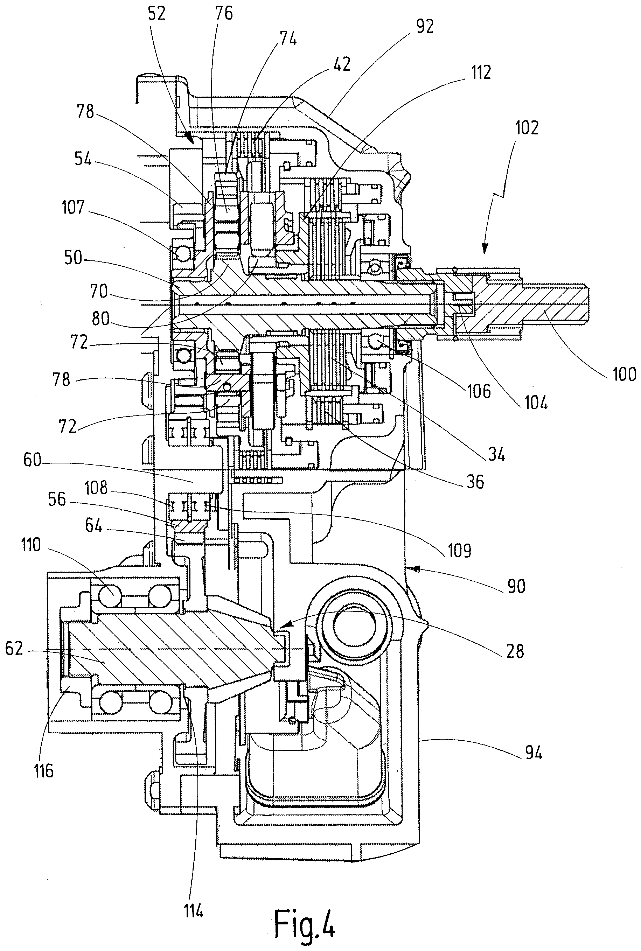

Fig. 4 ist eine Schnittansicht entlang der Linie IV-IV in Fig. 3.

Ein Antriebsglied 100 ist mit einer Abtriebswelle der Antriebseinheit 16 bzw. der Kardanwelle 22 verbunden. Das Antriebsglied 100 ist über eine Klauenkupplung 102 drehfest mit der Eingangswelle 50 verbunden und konzentrisch hierzu ausgerichtet. Die Klauenkupplung 102 weist ein Elastomerdämpferelement bzw. eine Mehrzahl von Elastomerdämpferelementen 104 auf. Diese dienen dazu, die Zuschaltanordnung 24 gegenüber Vibrationen der Antriebseinheit 16 zu dämpfen.

An dem ersten Teilgehäuse 92 sind ein erstes Lager 106 und ein zweites Lager 107 festgelegt, an denen die Eingangswelle 50 drehbar gelagert ist. In einem Bereich zwischen den zwei Teilgehäusen 92, 94 sind weitere Lager 108, 109 vorgesehen, an denen die Zwischenwelle 60 mit dem Zwischenrad 56 drehbar gelagert ist. Die Winkeltriebwelle 62 ist über eine Lagereinheit 110 an dem zweiten Teilgehäuse 94 drehbar gelagert. Das Ritzel 66 der Winkeltriebwelle 62 ist Teil eines Hypoidradpaars und kämmt mit dem Tellerrad 68, das ebenfalls an dem Teilgehäuse 94 drehbar gelagert ist, wie nachstehend beschrieben wird.

In dem ersten Teilgehäuse 92 sind konzentrisch zu der Eingangswelle 50 die erste und die zweite Zuschaltreibkupplung 34, 36 vorgesehen, wobei die zweite Zuschaltreibkupplung 36 radial außerhalb der ersten Zuschaltreibkupplung 34 angeordnet ist, und die Planetenradsatzanordnung 52. Die Planetenradsatzanordnung 52 ist zwischen den Zuschaltreibkupplungen 34, 36 und dem Ausgangsglied 54 angeordnet. Zwischen den Zuschaltreibkupplungen 34, 36 und einer eingangsseitigen Wand des ersten Teilgehäuses 92 sind nicht näher bezeichnete Aktuatoren für diese Reibkupplungen vorgesehen.

Ein Lamellenträger 112 ist an der Eingangswelle 50 drehbar gelagert und bildet einen Hohlradabschnitt, der mit dem Sonnenrad 80 des zweiten Planetenradsatzes 79 verbunden ist. Zum anderen weist der Lamellenträger 112 einen sich in axialer Richtung zwischen den zwei Zuschaltreibkupplungen 34, 36 erstreckenden Abschnitt auf, der ein Eingangsglied für diese zwei Kupplungen darstellt. Außenlamellenträger der zweiten Zuschaltreibkupplung 36 sind mit dem zweiten Teilgehäuse 94 verbunden. Innenlamellenträger der ersten Zuschaltreibkupplung 34 sind mit der Eingangswelle 50 verbunden.

Der Radsatzaufbau der Planetenradsatzanordnung 52 ist identisch wie in der Fig. 2.

Ferner ist in Fig. 4 zu erkennen, dass das Lager 110 für die Winkeltriebwelle 62 mittels einer Einstellscheibe 114 und einer Bundmutter 118 fixiert ist.

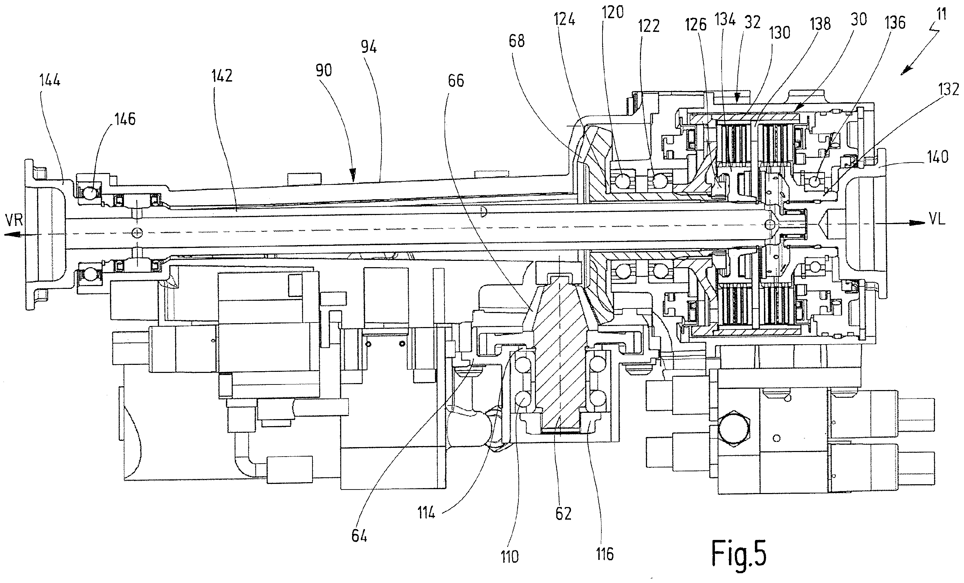

Fig. 5 zeigt eine Schnittansicht entlang der Linie V-V in Fig. 3.

Man erkennt wiederum die Winkeltriebwelle 62, die über einen Hypoidverzahnungseingriff mit dem Tellerrad 68 in Eingriff steht. Das Tellerrad 68 weist eine zentrale Durchgangsöffnung und einen sich in axialer Richtung erstreckenden Abschnitt auf, mittels dessen das Tellerrad 68 über zwei Schrägkugellager 120, 122 an dem zweiten Teilgehäuse 94 drehbar gelagert ist.

Das eine Schrägkugellager 120 stützt sich über eine Einstellscheibe 124 an dem Tellerrad 68 ab. Zwischen dem anderen Schrägkugellager 122 und einer Mutter 126 zur axialen Fixierung der Schrägkugellager 120, 122 ist ein Lamellenträger 130 angeordnet. Der Lamellenträger 130 ist drehfest mit dem Tellerrad 68 verbunden und weist einen Außenträgerabschnitt auf, der ein gemeinsames Eingangsglied für die zwei Achsreibkupplungen 30, 32 bildet. Die erste Achsreibkupplung 30 ist über einen Innenlamellenträger 132 mit einem Gelenkflansch 140 verbunden, der mit einer Antriebswelle für das linke Vorderrad VL verbindbar ist. Dabei ist der Innenlamellenträger 132 über ein Lager 136 an dem zweiten Teilgehäuse 94 drehbar gelagert.

Zwischen den zwei Achsreibkupplungen 30, 32 ist ein Sicherungsring in starker Ausführung gelagert, an dem sich die Lamellen der Achsreibkupplungen 30, 32 in axialer Richtung abstützen können.

Ein Innenlamellenträger 134 der zweiten Achsreibkupplung 32 ist mit einer Flanschwelle 142 verbunden, die sich durch das Tellerrad 68 hindurch zu einem in Querrichtung 29 gegenüberliegenden Ende des zweiten Teilgehäuses 94 erstreckt. An diesem Ende ist die Flanschwelle 142 mit einem Gelenkflansch 144 verbunden, der mit einer Antriebswelle für das rechte Vorderrad VR verbindbar ist. Ferner ist die Flanschwelle 142 in diesem Bereich mittels eines Lagers 146 an dem zweiten Teilgehäuse 94 drehbar gelagert.

Eine Aktuatorik zum Betätigen der zwei Achsreibkupplungen 30, 32 ist auf axial gegenüberliegenden Seiten dieser Kupplungen angeordnet. Die hierzu an dem zweiten Teilgehäuse 94 in axialer Richtung verschiebbaren Kolben sind über in Fig. 5 nicht näher bezeichnete Hydraulikaktuatoren betätigbar.

Im drucklosen Zustand sind die Achsreibkupplungen 30, 32 geöffnet, was die Sicherheit des Antriebsstranges 11 erhöht. Die Zuschaltreibkupplungen 34, 36, 42 und die Achsreibkupplungen 30, 32 können mittels einer gemeinsamen Fluidversorgung betätigt werden, die vorzugsweise einen hydraulischen Kupplungsaktuator mit Druckspeicher und diversen regelbaren Ventilen beinhaltet. Die hierzu benötigten elektrischen Signale werden von einem Steuergerät erzeugt und über Leistungsstufen aufbereitet. Auf diesem Steuergerät findet zumindest die Umwandlung von angefordertem Kupplungsmoment in eine Druckanforderung an den Kupplungsaktuator bzw. in einzelne elektrische Signale zum Stellen dieser Drücke statt. In dem Steuergerät können Temperaturmodelle der Kupplungen hinterlegt sein, die diese vor thermischen Überlastungen schützen.

Eine vorteilhafte Auslegung des Antriebsstranges 11 sieht vor, dass die den Zuschaltreibkupplungen 34, 36 zugeordneten Übersetzungen so abgestimmt sind, dass sie auf den zweiten bzw. vierten Vorwärtsgang des Stufengetriebes 18 passen. Ferner ist es bevorzugt, wenn hierzu ca. 5 % bis 15 %, insbesondere etwa 8 % bis 12 % Vorlauf des Lamellenträgers 130 in Bezug auf eine mittlere Radgeschwindigkeit an der Vorderachse eingerichtet wird, vorzugsweise über die Wahl der Übersetzungen (oder über Schlupf an wenigstens einer Reibkupplung 30-42). Hierdurch kann auch in engen Kurven noch positive Leistung in Richtung des kurvenäußeren Rades geleitet werden. Wird das Fahrzeug im ersten oder dritten Gang des Stufengetriebes 18 bewegt, so arbeiten die Achsreibkupplungen 30, 32 bei Betätigung mit hohem Schlupf, um eine positive Leistung zum entsprechenden Vorderrad VR bzw. VL zu leiten. Hierzu ist vorzugsweise eine aktive Ölkühlung für diese Achsreibkupplungen vorgesehen. Das Öl wird dabei aktiv durch die Lamellenpakete sowie durch einen Ölkühler (nicht dargestellt) gefördert.

Der erfindungsgemäße Antriebsstrang 11 kann außer bei primär heckgetriebenen Fahrzeugen auch bei primär frontgetriebenen Fahrzeugen verwendet werden, wobei die zweite angetriebene Achse dann die Hinterachse bildet.

## Patentansprüche

1. Antriebsstrang (11) für ein Allradfahrzeug (10), mit einer ersten angetriebenen Achse (12) und einer zweiten angetriebenen Achse (14), und mit einer Antriebseinheit (16), die zum einen mit einem Stufengetriebe (18) verbunden ist, das eine Mehrzahl von Gangstufen zum Einrichten unterschiedlicher Übersetzungsverhältnisse aufweist, wobei eine Getriebeausgangswelle des Stufengetriebes (18) mit der ersten angetriebenen Achse (12) verbunden ist,
wobei die Antriebseinheit (16) zum anderen mit einer Zuschaltanordnung (24) verbunden ist, deren Ausgangsglied (54) mit der zweiten angetriebenen Achse (14) verbunden ist, so dass Antriebsleistung über das Stufengetriebe (18) der ersten Achse (12) permanent zuführbar ist und Antriebsleistung über die Zuschaltanordnung (24) der zweiten Achse (14) nach Bedarf zuführbar ist, und mit einer elektronischen Steuereinheit, wobei in der Zuschaltanordnung (24) wenigstens eine Reibkupplung vorgesehen ist, die automatisiert von der Steuereinheit betätigt werden kann, um die zweite Achse (14) nach Bedarf zuzuschalten, wobei die Zuschaltanordnung (24) einer bestimmten Gangstufe des Stufengetriebes (18) zugeordnet ist, **dadurch gekennzeichnet, dass** die zweite angetriebene Achse (14) eine erste Achsreibkupplung (30) und eine zweite Achsreibkupplung (32) aufweist, die ein gemeinsames Eingangsglied (130) aufweisen und deren Ausgangsglieder jeweils mit einer Antriebswelle (140, 144) für ein linkes bzw. ein rechtes Rad (VL, VR) der zweiten Achse (14) verbunden sind, wobei die erste und die zweite Achsreibkupplung (30, 32) unabhängig voneinander ansteuerbar sind, und wobei die zwei Achsreibkupplungen (30, 32) in Achsrichtung (29) auf der gleichen Seite in Bezug auf einen Winkeltrieb (28) angeordnet sind, der die zweite Achse (14) mit der Zuschaltanordnung (24) verbindet, wobei die Steuereinheit dazu eingerichtet ist, dass die Reibkupplung beim Einlegen dieser bestimmten Gangstufe vollständig geschlossen wird, dass beim Einlegen einer Gangstufe unterhalb der vorbestimmten Gangstufe entweder die Reibkupplung oder die zwei Achskupplungen in Schlupfzustand betrieben werden, und dass beim Einlegen einer Gangstufe oberhalb der vorbestimmten Gangstufe die Reibkupplung offen bleibt.

2. Antriebsstrang nach Anspruch 1, **dadurch gekennzeichnet, dass** die Zuschaltanordnung (24) eine erste Zuschaltreibkupplung (34) und eine zweite Zuschaltreibkupplung (36) aufweist, die dazu ausgelegt sind, der zweiten Achse (14) Antriebsleistung über eine erste bzw. eine zweite Übersetzungsstufe (38, 40) zuzuführen, wobei die erste Übersetzungsstufe (38) wenigstens einer unteren Gangstufe des Stufengetriebes (18) zugeordnet ist und wobei die zweite Übersetzungsstufe (40) wenigstens einer höheren Gangstufe des Stufengetriebes (18) zugeordnet ist.

3. Antriebsstrang nach Anspruch 2, **dadurch gekennzeichnet, dass** die Zuschaltanordnung (24) eine Planetenradsatzanordnung (52) zur Einrichtung der ersten bzw. der zweiten Übersetzungsstufe (38, 40) aufweist.

4. Antriebsstrang nach Anspruch 3, **dadurch gekennzeichnet, dass** die Planetenradsatzanordnung eine Ravigneau-artige Planetenradsatzanordnung (52) mit einem ersten und einem zweiten Planetenradsatz (65, 79) aufweist, die axial nebeneinander angeordnet sind.

5. Antriebsstrang nach Anspruch 4, **dadurch gekennzeichnet, dass** die Planetenradsätze (65, 79) einen gemeinsamen Planetenträger (78) aufweisen.

6. Antriebsstrang nach einem der Ansprüche 4 oder 5, **dadurch gekennzeichnet, dass** der zweite Planetenradsatz (79) ein Sonnenrad (80) aufweist, das über die erste Zuschaltreibkupplung (34) mit einer Eingangswelle (50) der Zuschaltanordnung (24) verbindbar ist.

7. Antriebsstrang nach einem der Ansprüche 4 bis 6, **dadurch gekennzeichnet, dass** der zweite Planetenradsatz (79) ein Sonnenrad (80) aufweist, das über die zweite Zuschaltreibkupplung (36) mit einem Gehäuse (90) der Zuschaltanordnung (24) verbindbar ist.

8. Antriebsstrang nach einem der Ansprüche 2 bis 7, **dadurch gekennzeichnet, dass** die erste und die zweite Zuschaltreibkupplung (34, 36) radial ineinander verschachtelt ausgebildet sind.

9. Antriebsstrang nach einem der Ansprüche 2 bis 8, **dadurch gekennzeichnet, dass** die Zuschaltanordnung (24) eine dritte Zuschaltreibkupplung (42) aufweist, die dazu ausgelegt ist, der zweiten Achse (14) Antriebsleistung in entgegengesetzter Drehrichtung zuzuführen.

10. Antriebsstrang nach einem der Ansprüche 1 bis 9, **dadurch gekennzeichnet, dass** eine Eingangswelle (50) der Zuschaltanordnung (24) über eine Dämpfungsanordnung (102, 104) formschlüssig mit der Antriebseinheit verbunden ist.

11. Antriebsstrang nach einem der Ansprüche 2 bis 10, **dadurch gekennzeichnet, dass** die Zuschaltanordnung (24) ein Gehäuse (90) aufweist, das eine Eingangswelle (50), die Zuschaltreibkupplungen (34, 36), eine Planetenradsatzanordnung (52) und das konzentrisch zur Eingangswelle (50) angeordnete Ausgangsglied (54) aufweist.

12. Antriebsstrang nach einem der Ansprüche 1 bis 11, **dadurch gekennzeichnet, dass** das gemeinsame Eingangsglied (130) ein gemeinsamer Lamellenträger ist.

13. Antriebsstrang nach einem der Ansprüche 2 bis 12, **dadurch gekennzeichnet, dass** die Übersetzungen, die zum einen mittels der Zuschaltreibkupplungen (34, 36) und zum anderen mittels der jeweils zugeordneten Gangstufe des Stufengetriebes (18) eingerichtet werden, so gewählt sind, dass die Drehzahl der vorderen Achse (14) um 5 % bis 15 % höher ist als eine Referenzdrehzahl.

14. Verfahren zum Ansteuern eines Antriebsstranges (11) nach einem der Ansprüche 1 bis 13, mit den Schritten:
- Erfassen, ob in dem Stufengetriebe (18) eine Gangstufe eingelegt ist, die einen Allradbetrieb des Antriebsstranges (11) zulässt;
- Erfassen, ob eine Differenzdrehzahl zwischen der ersten und der zweiten Achse (12, 14) vorhanden ist oder aufzutreten droht;
- Einrichten des Allradbetriebes durch Betätigen einer von wenigstens zwei Zuschaltreibkupplungen (34, 36), und zwar jener Zuschaltreibkupplung (34, 36), die der eingelegten Gangstufe zugeordnet ist, wobei die Zuschaltreibkupplung (34, 36) in einem solchen Zustand betrieben wird, dass die von dem Antriebsstrang (11) an der Vorderachse (14) eingerichtete Drehzahl größer oder gleich der Drehzahl der Hinterachse (12) ist; und
- Betätigen von wenigstens einer von den zwei Achsreibkupplungen (30, 32) an der zweiten Achse (14), die einem linken bzw. einem rechten Rad (VL, VR) der zweiten Achse (14) zugeordnet sind.

## Claims

1. Drivetrain (11) for an all-wheel-drive vehicle (10) which has a first driven axle (12) and a second driven axle (14), having a drive unit (16) which is connected to a multi-stage transmission (18) which has a multiplicity of gear stages for generating different transmission ratios, with a transmission output shaft of the multi-stage transmission (18) being connected to the first driven axle (12), with the drive unit (16) also being connected to an activating arrangement (24), the output element (54) of which is connected to the second driven axle (14), such that drive power can be supplied to the first axle (12) permanently via the multi-stage transmission (18) and drive power can be supplied to the second axle (14) on demand via the activating arrangement (24), and having an electronic control unit, wherein at least one friction clutch is provided in the activating arrangement (24), wherein the friction clutch can be actuated automatically by the control unit in order to activate the second axle (14) on demand, wherein the activating arrangement (24) is assigned to a selected gear stage of the multi-stage transmission (18),
**characterized in that** the second driven axle (14) has a first axle friction clutch (30) and a second axle friction clutch (32) which have a common input element (130) and whose output elements are connected in each case to a driveshaft (140, 144) for a left-hand wheel (FL) and a right-hand wheel (FR) of the second axle (14), with it being possible for the first and the second axle friction clutches (30, 32) to be controlled independently of one another, and wherein two axle friction clutches (30, 32) are arranged on the same side, in the axle direction (29), in relation to an angle drive (28) which connects the second axle (14) to the activating arrangement (24), wherein the control unit is adapted such that the friction clutch is fully closed when shifting the selected gear stage, that either the friction clutch or the two axle friction clutches are operated in a slip condition when shifting a gear stage below the selected gear stage, and that the friction clutch remains open when shifting a gear stage above the selected gear stage.

2. Drivetrain according to Claim 1, **characterized in that** the activating arrangement (24) has a first activating friction clutch (34) and a second activating friction clutch (36) which are designed to supply drive power to the second axle (14) via a first and a second transmission ratio stage (38, 40) respectively, with the first transmission ratio stage (38) being assigned to at least one lower gear stage of the multi-stage transmission (18) and with the second transmission ratio stage (40) being assigned to at least one higher gear stage of the multi-stage transmission (18).

3. Drivetrain according to Claim 2, **characterized in that** the activating arrangement (24) has a planetary gear set arrangement (52) for generating the first and the second transmission ratio stages (38, 40).

4. Drivetrain according to Claim 3, **characterized in that** the planetary gear set arrangement has a Ravigneau-type planetary gear set arrangement (52) with a first and a second planetary gear set (65, 79) which are arranged axially adjacent to one another.

5. Drivetrain according to Claim 4, **characterized in that** the planetary gear sets (65, 79) have a common planet carrier (78).

6. Drivetrain according to one of Claims 4 or 5, **characterized in that** the second planetary gear set (79) has a sun gear (80) which can be connected via the first activating friction clutch (34) to an input shaft (50) of the activating arrangement (24).

7. Drivetrain according to one of Claims 4 to 6, **characterized in that** the second planetary gear set (79) has a sun gear (80) which can be connected via the second activating friction clutch (36) to a housing (90) of the activating arrangement (24).

8. Drivetrain according to one of Claims 2 to 7, **characterized in that** the first and the second activating friction clutches (34, 36) are nested radially one inside the other.

9. Drivetrain according to one of Claims 2 to 8, **characterized in that** the activating arrangement (24) has a third activating friction clutch (42) which is designed to supply drive power to the second axle (14) in the opposite rotational direction.

10. Drivetrain according to one of Claims 1 to 9, **characterized in that** an input shaft (50) of the activating arrangement (24) is connected via a damping arrangement (102, 104) to the drive unit in a positively locking fashion.

11. Drivetrain according to one of Claims 2 to 10, **characterized in that** the activating arrangement (24) has a housing (90) which holds an input shaft (50), the activating friction clutches (34, 36), a planetary gear set arrangement (52) and the output element (54) which is arranged concentrically with respect to the input shaft (50).

12. Drivetrain according to one of Claims 1 to 11, **characterized in that** the common input element (130) is a common plate carrier.

13. Drivetrain according to one of Claims 2 to 12, **characterized in that** the transmission ratios which are generated firstly by means of the activating friction clutches (34, 36) and secondly by means of the respectively associated gear stage of the multi-stage transmission (18) are selected such that the rotational speed of the front axle (14) is 5% to 15% higher than a reference rotational speed.

14. Method for controlling a drivetrain (11) according to one of Claims 1 to 13, having the steps:
- detecting whether a gear stage which permits all-wheel-drive operation of the drivetrain (11) is selected in the multi-stage transmission (18);
- detecting whether a rotational speed difference is present or impending between the first and second axles (12, 14);
- implementing all-wheel-drive operation by actuating one of at least two activating friction clutches (34, 36), specifically that activating friction clutch (34, 36) which is assigned to the selected gear stage, with the activating friction clutch (34, 36) being operated in such a state that the rotational speed generated by the drivetrain (11) at the front axle (14) is greater than or equal to the rotational speed of the rear axle (12); and
- actuating at least one of the two axle friction clutches (30, 32) on the second axle (14) which are assigned to a left-hand wheel (FL) and to a right-hand wheel (FR), respectively, of the second axle (14).

## Revendications

1. Chaîne cinématique (11) pour un véhicule tout-terrain (10), avec un premier essieu (12) entraîné et un deuxième essieu (14) entraîné, et avec une unité motrice (16), qui d'une part est reliée avec une boîte de vitesses mécanique (18), qui comporte une pluralité de rapports de vitesse pour installer différents rapports de transmission, un arbre de sortie de la boîte de vitesses mécaniques (18) étant relié avec le premier essieu (12) entraîné,
l'unité motrice (16) étant reliée d'autre part avec un agencement de mise en circuit (24) dont l'organe de sortie (54) est relié avec le deuxième essieu (14) entraîné, de sorte que de la puissance motrice puisse être amenée en permanence par l'intermédiaire de la boîte de vitesses mécanique (18) au premier essieu (12) et que de la puissance motrice puisse être amenée par l'intermédiaire de l'agencement de mise en circuit (24) en fonction des besoins au deuxième essieu (14) et avec une unité de commande électronique, dans l'agencement de mise en circuit (24) étant prévu au moins un embrayage à friction qui peut être actionné de manière automatisée par l'unité de commande pour mettre en circuit le deuxième essieu (14) en fonction des besoins, l'agencement de mise en circuit (24) étant affecté à un certain rapport de vitesse de la boîte de vitesses mécanique (18), **caractérisée en ce que**
le deuxième essieu (14) entraîné comporte un premier embrayage d'essieu à friction (30) et un deuxième embrayage d'essieu à friction (32) qui comportent un organe d'entrée (130) commun et dont les organes de sortie sont reliés chacun avec un arbre de transmission (140, 144) pour une roue gauche ou une roue droite (VL, VR) du deuxième essieu (14), le premier et le deuxième embrayage d'essieu à friction (30, 32) étant activables indépendamment l'un de l'autre et les deux embrayages d'essieu à friction (30, 32) étant placés sur le même côté dans la direction axiale (29), en rapport à un renvoi d'angle (28), qui relie le deuxième essieu (14) avec l'agencement de mise en circuit (24), l'unité de commande étant aménagée pour que lors du passage dudit rapport de vitesse déterminé, l'embrayage à friction se ferme complètement, pour que lors du passage d'un rapport de vitesse inférieur au rapport de vitesse prédéfini, soit l'embrayage à friction ou les deux axes d'embrayage fonctionnent en patinage, et pour que lors d'un passage d'un rapport de vitesse supérieur au rapport de vitesse prédéfini, l'embrayage à friction reste ouvert.

2. Chaîne cinématique selon la revendication 1, **caractérisée en ce que** l'agencement de mise en circuit (24) comporte un premier embrayage à friction connectable (34) et un deuxième embrayage à friction connectable (36) qui sont conçus pour amener au deuxième essieu (14) de la puissance motrice par l'intermédiaire d'un premier ou d'un deuxième rapport de vitesse (38, 40), le premier rapport de vitesse (38) étant affecté à au moins un rapport de vitesse inférieur de la boîte de vitesses mécanique (18) et le deuxième rapport de vitesse (40) étant affecté à au moins un rapport de vitesse supérieur de la boîte de vitesses mécanique (18).

3. Chaîne cinématique selon la revendication 2, **caractérisée en ce que** l'agencement de mise en circuit (24) comporte un agencement de trains d'engrenages planétaires (52) pour la mise en place du premier ou du deuxième rapport de vitesse (38, 40).

4. Chaîne cinématique selon la revendication 3, **caractérisée en ce que** l'agencement de trains d'engrenages planétaires comporte un agencement de trains d'engrenages planétaires de type Ravigneau (52), avec un premier et un deuxième trains d'engrenages (65, 79) qui sont placés côte à côte en direction axiale.

5. Chaîne cinématique selon la revendication 4, **caractérisée en ce que** les trains d'engrenages (65, 79) comportent un support planétaire (78) commun.

6. Chaîne cinématique selon l'une quelconque des revendications 4 ou 5, **caractérisée en ce que** le deuxième train d'engrenages planétaires (79) comporte un pignon planétaire (80) qui peut se relier par l'intermédiaire du premier embrayage à friction connectable (34) avec un arbre d'entrée (50) de l'agencement de mise en circuit (24).

7. Chaîne cinématique selon l'une quelconque des revendications 4 à 6, **caractérisée en ce que** le deuxième train d'engrenages planétaires (79) comporte un pignon planétaire (80) qui peut se relier par l'intermédiaire du deuxième embrayage à friction connectable (36) avec un boîtier (90) de l'agencement de mise en circuit (24).

8. Chaîne cinématique selon l'une quelconque des revendications 2 à 7, **caractérisée en ce que** le premier et le deuxième embrayages à friction connectables (34, 36) sont conçus en étant emboîtés l'un dans l'autre en direction radiale.

9. Chaîne cinématique selon l'une quelconque des revendications 2 à 8, **caractérisée en ce que** l'agencement de mise en circuit (24) comporte un troisième embrayage à friction connectable (42) qui est conçu pour amener au deuxième essieu (14) de la puissance motrice dans un sens de rotation opposé.

10. Chaîne cinématique selon l'une quelconque des revendications 1 à 9, **caractérisée en ce qu'**un arbre d'entrée (50) de l'agencement de mise en circuit (24) est relié par complémentarité de forme par l'intermédiaire d'un agencement amortisseur (102, 104) avec l'unité motrice.

11. Chaîne cinématique selon l'une quelconque des revendications 2 à 10, **caractérisée en ce que** l'agencement de mise en circuit (24) comporte un boîtier (90) qui comporte un arbre d'entrée (50), les embrayages à friction connectables (34, 36), un agencement de trains d'engrenages planétaires (52) et l'organe de sortie (54) placé de manière concentrique par rapport à l'arbre d'entrée (50).

12. Chaîne cinématique selon l'une quelconque des revendications 1 à 11, **caractérisée en ce que** l'organe d'entrée (130) commun est un porte-lamelles commun.

13. Chaîne cinématique selon l'une quelconque des revendications 2 à 12, **caractérisée en ce que** les transmissions qui sont installées d'une part au moyen des embrayages à friction connectables (34, 36), et d'autre part au moyen du rapport de vitesse respectivement affecté de la boîte de vitesses mécanique (18) sont choisies de telle sorte que la vitesse de rotation de l'essieu avant (14) soit supérieure de 5 % à 15 % à une vitesse de rotation de référence.

14. Procédé destiné à activer une chaîne cinématique (11) selon l'une quelconque des revendications 1 à 13, avec les étapes suivantes :
- détecter si, dans la boîte de vitesses mécanique (18) un rapport de vitesse est passé qui autorise un fonctionnement en mode tout terrain de la chaîne cinématique (11) ;
- détecter si une vitesse de rotation différentielle entre le premier et le deuxième essieux (12, 14) est présente ou risque de se produire ;
- mettre en place le mode tout terrain par activation de l'un des au moins deux embrayages à friction connectables (34, 36), et à savoir de l'embrayage à friction connectable (34, 36) qui est affecté au rapport de vitesse passé, l'embrayage à friction connectable (34, 36) fonctionnant dans un état tel, que la vitesse de rotation installée par la chaîne cinématique (11) sur l'essieu avant (14) soit supérieure ou égale à la vitesse de rotation de l'essieu arrière (12) ; et
- actionner au moins l'un des deux embrayages d'essieu à friction (30, 32) sur le deuxième essieu (14), qui sont affectés à une roue droite ou gauche (VL, VR) du deuxième essieu (14).
